# FASCICULE DE BREVET EUROPEEN

(11) **EP 1 907 265 B1**
(45) Date de publication et mention de la délivrance du brevet: **26.08.2009**
(21) Numéro de dépôt: 06778998.2
(22) Date de dépôt: 30.06.2006
(51) Int. Cl.: B62D 25/10, B60R 21/34, B60R 13/08

(54) **CAPOT AVANT DE VEHICULE AUTOMOBILE**
VORDERHAUBE FÜR EIN KRAFTFAHRZEUG
MOTOR VEHICLE FRONT HOOD

(30) Priorité: 18.07.2005 FR 0507594
(43) Date de publication de la demande: 09.04.2008
(73) Titulaire: RENAULT S.A.S., 92100 Boulogne Billancourt (FR)
(72) Inventeur: TETU, Yvon, F-92250 La Garenne Colombes (FR); ZANOLIN, Dominique, F-78150 Le Chesnay (FR); ZHANG, Charles, F-78280 Guyancourt (FR)
(74) Mandataire: Guyon, Rodolphe C.
(86) Numéro de dépôt international: PCT/FR2006/050654
(87) Numéro de publication internationale: WO 2007/010153

(56) Documents cités:
- EP-A- 1 357 018
- DE-A1- 10 259 591
- DE-A1- 19 929 048
- PATENT ABSTRACTS OF JAPAN vol. 2003, no. 12, 5 décembre 2003 (2003-12-05) -& JP 2004 082796 A (NISSAN MOTOR CO LTD), 18 mars 2004 (2004-03-18)

## Description

La présente invention concerne un capot avant de véhicule automobile assurant une protection améliorée notamment en cas de choc avec un piéton, tout en incluant une fonction d'insonorisation à l'égard du bruit généré par le moteur thermique du véhicule automobile.

Les exigences actuelles sur les plans économiques, du confort des utilisateurs, de la réglementation en matière de sécurité exigent que les capots avant de véhicules automobiles soient à la fois légers, peu coûteux à fabriquer, aptes à absorber le bruit émis par le moteur thermique et capable d'absorber le choc de la tête d'un piéton heurtant le capot à faible vitesse.

De plus, l'épaisseur du capot doit être relativement faible pour ne pas réduire l'espace disponible sous le capot, c'est-à-dire dans le compartiment moteur, tout en présentant une rigidité structurelle suffisant.

Les capots avant de véhicules automobiles comportent généralement un panneau extérieur en acier, en aluminium ou en matière synthétique.

Ce panneau extérieur est doublé par un panneau intérieur dont la périphérie est liée à la périphérie du panneau extérieur par sertissage, soudage ou collage.

L'insonorisation peut être assurée par un revêtement en matière absorbante acoustique.

Le document DE 102 59591 décrit un capot avant selon le préambule de la revendication 1.

Le but de la présente invention est de créer un capot avant de véhicule automobile répondant aux exigences actuelles en matière de coût, confort et sécurité.

Suivant l'invention, le capot avant de véhicule automobile comprenant un panneau extérieur et un panneau intérieur de doublure dont la périphérie est liée à la périphérie du panneau extérieur, dans lequel le panneau intérieur de doublure présente une ouverture dont la surface représente une partie prépondérante de la surface totale du panneau intérieur de doublure, cette ouverture étant recouverte par un panneau de couverture dont la périphérie est fixée sur le pourtour de l'ouverture et dont la surface comporte une série de cavités parallèles et allongées dans la direction de l'axe du capot, ce panneau de couverture comportant une multitude de petits trous.

Ces petits trous sont répartis au moins dans lesdites cavités et, de préférence, sur l'ensemble de la surface du panneau de couverture.

Les cavités allongées réalisées dans le panneau de couverture du panneau de doublure confèrent à l'ensemble du capot la rigidité mécanique exigée.

Grâce aux petits trous réalisés dans le panneau de doublure, les cavités de celui-ci fonctionnent comme des résonateurs de Helmholtz en absorbant l'énergie acoustique émise par le moteur.

De préférence, le panneau de couverture est recouvert par un revêtement absorbant acoustique.

Ce revêtement complète ainsi l'effet d'absorption acoustique procuré par les résonateurs d'Helmholtz précités.

Dans une version avantageuse de invention, le revêtement absorbant acoustique est constitué par une plaque insonorisante intercalée entre le panneau extérieur et le panneau de couverture.

Avantageusement, l'une des faces de la plaque insonorisante est plane et est appliquée contre la face intérieure du panneau extérieur et l'autre face de la plaque insonorisante porte des reliefs allongés qui sont engagés dans les cavités allongées réalisées dans le panneau de couverture.

De préférence, les reliefs de la plaque insonorisante remplissent une partie du volume intérieur des cavités du panneau de couverture et le volume vide existant entre chaque relief et chaque cavité communique avec l'extérieur par les petits trous formés dans le panneau de couverture.

Cette disposition confère au capot d'excellentes propriétés acoustiques, mécaniques, tout en répondant aux exigences en matière de sécurité et de faible coût de fabrication.

D'autres particularités et avantages de l'invention apparaîtront encore dans la description ci-après.

Aux dessins annexés, donnés à titre d'exemples non limitatifs :
- la figure 1 est une vue en perspective éclatée montrant les différents composants d'un capot avant de véhicule automobile selon l'invention,
- la figure 2 est une vue en coupe transversale du capot selon l'invention,
- la figure 3 est une vue en coupe à échelle agrandie du détail A de la figure 2,
- la figure 4 est une vue analogue à la figure 3 concernant une variante,
- la figure 5 est une vue en perspective partielle de la plaque de couverture du capot selon l'invention,
- la figure 6 est une vue analogue à la figure 5 concernant une variante de réalisation de la plaque de couverture.

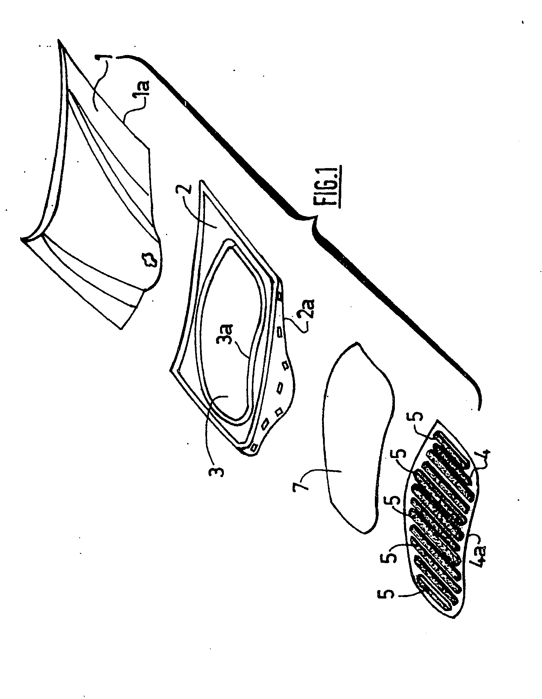

La figure 1 représente un capot avant de véhicule automobile comprenant un panneau extérieur 1 et un panneau intérieur de doublure 2 dont la périphérie 2a est destinée à être liée à la périphérie la du panneau extérieur 1.

Le panneau intérieur de doublure 2 présente une ouverture 3 dont la surface représente une partie prépondérante de la surface totale du panneau intérieur de doublure 2.

L'ouverture 3 du panneau de doublure 2 est destinée à être recouverte par un panneau de couverture 4 dont la périphérie 4a est destinée à être fixée sur le pourtour 3a de l'ouverture 3.

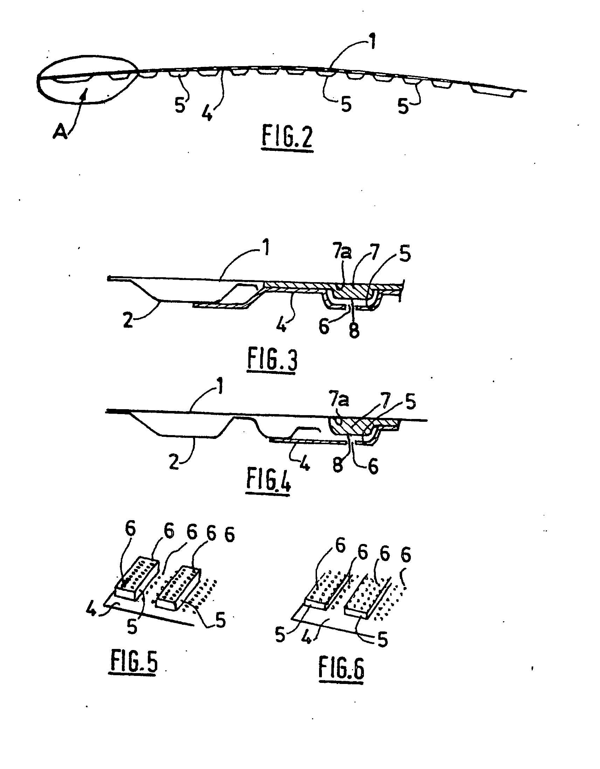

La surface du panneau de couverture 4 comporte une série de cavités 5 parallèles et allongées dans la direction de l'axe de symétrie du capot. Ce panneau de couverture 4 comporte (voir figures 5 et 6) une multitude de petits trous 6 répartis sensiblement sur l'ensemble de sa surface.

Le panneau extérieur 1 est par exemple en acier, ou en aluminium ou encore en matière synthétique. Le panneau de doublure 2 et le panneau de couverture 4 sont réalisés dans la même matière que le panneau extérieur 1.

La périphérie 2a du panneau de doublure 2 est fixée, de façon continue, à la périphérie la du panneau extérieur 1 par soudage, collage et/ou sertissage.

La périphérie 4a du panneau de couverture 4 est fixée sur la périphérie 3a de l'ouverture 3 du panneau de doublure 2 par des vis ou des agrafes.

Les petits trous 6 formés sur les cavités allongées 5 et sur les parties situées entre celles-ci (voir figures 5 et 6) peuvent avoir un diamètre compris entre 0,5 et 5 mm environ. La profondeur de ces cavités 5 peut être de l'ordre de 0,5 à 2 cm.

Les figures 3 et 4 montrent le détail de deux modes d'assemblage entre le panneau de couverture 4 et le bord du panneau de doublure 2.

Dans la version préférée de l'invention, le panneau de couverture 4 est recouvert par un revêtement absorbant acoustique 7.

Dans l'exemple représenté (voir figures 1, 3 et 4), le revêtement absorbant acoustique 7 est constitué par une plaque insonorisante intercalée entre le panneau extérieur 1 et le panneau de couverture 4.

Comme montré par les figures 3 et 4, l'une 7a des faces de la plaque insonorisante 7 est plane et est appliquée contre la face intérieure du panneau extérieur 1 et l'autre face de la plaque insonorisante 7 porte des reliefs allongés 8 qui sont engagés dans les cavités allongées 5 réalisées dans le panneau de couverture 4.

Les figures 3 et 4 montrent en outre que les reliefs 8 de la plaque insonorisante 7 sont séparés par des faces planes qui sont en contact avec les faces planes qui séparent les cavités allongées 5 du panneau de couverture 4. Autrement dit, la plaque insonorisante est prise en sandwich entre les panneaux 1 et 4.

Par ailleurs, les reliefs 8 de la plaque insonorisante 7 remplissent une partie du volume intérieur des cavités 5 du panneau de couverture 4. De plus, le volume vide existant entre chaque relief 8 et chaque cavité 5 communique avec l'extérieur par les petits trous 6 formés dans le panneau de couverture 4.

Les principaux avantages du capot avant de véhicule automobile que l'on vient de décrire sont les suivants.

Du fait de sa structure, le capot est à la fois léger, rigide et satisfait la réglementation en matière de sécurité en cas, notamment, de choc avec un piéton.

Les cavités allongées 5 réalisées dans la plaque de couverture 4 jouent à la fois un rôle important dans la rigidité du capot et dans son aptitude à absorber les chocs et également dans l'absorption de l'énergie acoustique générée par le moteur thermique.

En effet, ces cavités 5 qui communiquent avec le compartiment moteur par des trous 6 de faible section, se comportent comme des cavités résonnantes de Helmholtz.

L'effet d'absorption acoustique procuré par les cavités 7 est renforcé significativement par la présence de la plaque insonorisante 7 intercalée entre le panneau de couverture 4 et le panneau extérieur 1. A cet effet, les reliefs 8 réalisés sur la plaque insonorisante 7 au droit des cavités 5 accentuent l'effet d'absorption acoustique du fait de l'épaisseur de ces reliefs.

Par ailleurs, du fait que ces reliefs 8 ne remplissent que partiellement les cavités 5, celles-ci peuvent assurer leur fonction de cavités résonnantes d'une manière optimale.

## Revendications

1. Capot avant de véhicule automobile comprenant un panneau extérieur (1) et un panneau intérieur de doublure (2) dont la périphérie est liée à la périphérie du panneau extérieur (1), le panneau intérieur de doublure (2) présentant une ouverture (3) dont la surface représente une partie prépondérante de la surface totale du panneau intérieur de doublure (2), cette ouverture (3) étant recouverte par un panneau de couverture (4) dont la périphérie est fixée sur le pourtour de l'ouverture (3), **caractérisé en ce que** la surface du panneau de couverture (4) comporte une série de cavités (5) parallèles et allongées dans la direction de l'axe du capot, ce panneau de couverture (4) comportant une multitude de petits trous (6).

2. Capot selon la revendication 1, **caractérisé en ce que** les petits trous (6) sont répartis au moins dans les cavités 5.

3. Capot selon la revendication 1, **caractérisé en ce que** les petits trous (6) sont répartis sur l'ensemble du panneau de couverture (4).

4. Capot avant selon l'une des revendications 1 à 3, **caractérisé en ce que** le panneau de couverture (4) est recouvert par un revêtement absorbant acoustique.

5. Capot avant selon l'une des revendications 1 à 4, **caractérisé en ce que** le revêtement absorbant acoustique est constitué par une plaque insonorisante (7) intercalée entre le panneau extérieur (1) et le panneau de couverture (4).

6. Capot avant selon la revendication 5, **caractérisé en ce que** l'une des faces de la plaque insonorisante (7) est plane et est appliquée contre la face intérieure du panneau extérieur (1) et l'autre face de la plaque insonorisante (7) porte des reliefs (8) allongés qui sont engagés dans les cavités allongées (5) réalisées dans le panneau de couverture (4).

7. Capot avant selon la revendication 6, **caractérisé en ce que** les reliefs (8) de la plaque insonorisante (7) sont séparés par des faces planes qui sont en contact avec les faces planes qui séparent les cavités allongées (5) du panneau de couverture (4).

8. Capot avant selon l'une des revendications 6 ou 7, **caractérisé en ce que** les reliefs (8) de la plaque insonorisante (7) remplissent une partie du volume intérieur des cavités (5) du panneau de couverture (4).

9. Capot avant selon la revendication 8, **caractérisé en ce que** le volume vide existant entre chaque relief (8) et chaque cavité (5) communique avec l'extérieur par les petits trous (6) formés dans le panneau de couverture (4).

## Claims

1. Motor vehicle front hood comprising an outer panel (1) and an inner lining panel (2), the periphery of which is connected to the periphery of the outer panel (1), the inner lining panel (2) having an opening (3) whose area represents most of the total area of the inner lining panel (2), this opening (3) being covered by a cover panel (4) whose periphery is secured to the circumference of the opening (3), **characterized in that** the surface of the cover panel (4) has a number of parallel cavities (5) which are elongate in the direction of the hood axis, this cover panel (4) having a large number of small holes (6).

2. Hood according to Claim 1, **characterized in that** the small holes (6) are distributed at least in the cavities (5).

3. Hood according to Claim 1, **characterized in that** the small holes (6) are distributed over the entire cover panel (4).

4. Front hood according to one of Claims 1 to 3, **characterized in that** the cover panel (4) is covered by an acoustically absorbent layer.

5. Front hood according to one of Claims 1 to 4, **characterized in that** the acoustically absorbent layer consists of a sound insulating plate (7) inserted between the outer panel (1) and the cover panel (4).

6. Front hood according to Claim 5, **characterized in that** one of the faces of the sound insulating plate (7) is planar and is applied to the inner surface of the outer panel (1) and the other face of the sound insulating plate (7) bears elongate ridges (8) which engage in the elongate cavities (5) provided in the cover panel (4).

7. Front hood according to Claim 6, **characterized in that** the ridges (8) of the sound insulating plate (7) are separated by planar faces which are in contact with the planar faces which separate the elongate cavities (5) of the cover panel (4).

8. Front hood according to one of Claims 6 or 7, **characterized in that** the ridges (8) of the sound insulating plate (7) fill in a part of the internal volume of the cavities (5) of the cover panel (4).

9. Front hood according to Claim 8, **characterized in that** the empty volume between each ridge (8) and each cavity (5) communicates with the outside via the small holes (6) formed in the cover panel (4).

## Patentansprüche

1. Vorderhaube für ein Kraftfahrzeug, das eine Außenbeplankung (1) und eine Innenverkleidungsbeplankung (2) umfasst, deren Peripherie mit der Peripherie der Außenbeplankung (1) verbunden ist, wobei die Innenverkleidungsbeplankung (2) eine Öffnung (3) aufweist, deren Fläche einen Hauptteil der Hauptfläche der Innenverkleidungsbeplankung (2) darstellt, wobei diese Öffnung (3) durch eine Abdeckbeplankung (4) bedeckt ist, deren Peripherie an dem Umfang der Öffnung (3) befestigt ist, **dadurch gekennzeichnet, dass** die Fläche der Abdeckbeplankung (4) eine Reihe von parallelen und in Richtung der Achse der Haube ausgestreckten Aushöhlungen (5) aufweist, wobei diese Abdeckbeplankung (4) mehrere kleine Löcher (6) aufweist.

2. Vorderhaube nach Anspruch 1, **dadurch gekennzeichnet, dass** die kleinen Löcher (6) zumindest in den Aushöhlungen (5) verteilt sind.

3. Vorderhaube nach Anspruch 1, **dadurch gekennzeichnet, dass** die kleinen Löcher (6) über die ganze Abdeckbeplankung (4) verteilt sind.

4. Vorderhaube nach einem der Ansprüche 1 bis 3, **dadurch gekennzeichnet, dass** die Abdeckbeplankung (4) von einer schallabsorbierenden Verkleidung bedeckt ist.

5. Vorderhaube nach einem der Ansprüche 1 bis 4, **dadurch gekennzeichnet, dass** die schallabsorbierende Verkleidung aus einer Dämpfungsplatte (7) besteht, die zwischen der Außenbeplankung (1) und der Abdeckbeplankung (4) angeordnet ist.

6. Vorderhaube nach Anspruch 5, **dadurch gekennzeichnet, dass** eine der Flächen der Dämpfungsplatte (7) eben ist und an die Innenfläche der Außenbeplankung (1) angedrückt wird und die andere Fläche der Dämpfungsplatte (7) längliche Erhöhungen (8) aufweist, die in den in der Abdeckbeplankung (4) ausgebildeten länglichen Aushöhlungen (5) in Eingriff stehen.

7. Vorderhaube nach Anspruch 6, **dadurch gekennzeichnet, dass** die Erhöhungen (8) der Dämpfungsplatte (7) durch ebene Flächen getrennt sind, die mit den ebenen Flächen, die die länglichen Aushöhlungen (5) der Abdeckbeplankung (4) trennen, in Kontakt stehen.

8. Vorderhaube nach Anspruch 6 oder 7, **dadurch gekennzeichnet, dass** die Erhöhungen (8) der Dämpfungsplatte (7) einen Teil des Innenvolumens der Aushöhlungen (5) der Abdeckbeplankung (4) füllen.

9. Vorderhaube nach Anspruch 8, **dadurch gekennzeichnet, dass** das zwischen jeder Erhöhung (8) und jeder Aushöhlung (5) bestehende leere Volumen durch die in der Abdeckbeplankung (4) ausgebildeten kleinen Löcher (6) mit dem Äußeren in Verbindung stehen.
